# FASCICULE DE BREVET EUROPEEN

(11) **EP 1 661 617 B1**
(45) Date de publication et mention de la délivrance du brevet: **29.02.2012**
(21) Numéro de dépôt: 05292305.9
(22) Date de dépôt: 28.10.2005
(51) Int. Cl.: B01J 8/00, B01J 8/04, B01J 8/08, C10G 50/02

(54) **Réacteur à plusieurs zones en lit fixe ou mobile avec echangeur thermique intégré**
Festbett- oder Wanderbettreaktor mit mehreren Zonen und integriertem Wärmetauscher
Reactor having a plurality of fixed bed or mobile bed zones with integrated heat exchanger

(30) Priorité: 09.11.2004 FR 0411959
(43) Date de publication de la demande: 31.05.2006
(73) Titulaire: Institut Français du Pétrole, 92852 Rueil Malmaison Cedex (FR)
(72) Inventeur: Louret, Sylvain, 69007 Lyon (FR); Font, Patrice, 69440 Mornant (FR); Lacombe, Sylvie, 69230 Saint Genis Laval (FR); Sanchez, Eric, 92500 Rueil Malmaison (FR); Simon, Laurent, 69003 Lyon (FR)

(56) Documents cités:
- EP-A- 1 236 506
- WO-A2-2005/052229
- FR-A- 2 129 913
- US-A- 2 336 041
- US-A- 2 376 365
- US-A- 4 547 151

## Description

### Domaine de l'invention

La présente invention concerne un réacteur à l'intérieur duquel est réalisée au moins une réaction catalytique présentant un effet thermique important, généralement un dégagement de chaleur (réactions dites exothermiques) ou parfois une absorption de chaleur (réactions dites endothermiques).

Elle concerne également un procédé d'oligomérisation de charges oléfiniques (c'est-à-dire une polymérisation ou addition limitée à essentiellement 2 à 6 monomères ou molécules de base). Elle concerne notamment les réactions d'addition d'une oléfine sur un autre composé présent dans la charge, par exemple une oléfine, un composé soufré, un composé azoté, une molécule aromatique, lesdites réactions d'addition visant à augmenter le poids moléculaire de ce composé.

Elle concerne plus particulièrement les réactions d'oligomérisation à partir de coupes hydrocarbures oléfiniques contenant de 2 à 12 atomes de carbone, préférentiellement de 3 à 7 atomes de carbone, et plus particulièrement de 4 à 6 atomes de carbone, les réactions d' oligomérisation permettant de produire des coupe essence, diesel ou lubrifiant, et plus particulièrement des hydrocarbures de la coupe diesel.

L'invention concerne un réacteur à plusieurs zones réactionnelles, empilées verticalement et séparées par au moins une zone d'échange thermique au niveau d'un rétrécissement du passage de catalyseur entre les zones réactionnelles.

### Examen de l'art antérieur

Il est connu dans l'art antérieur de réaliser des réactions chimiques, notamment pour le raffinage de fractions pétrolières ou d'hydrocarbures, dans les réacteurs catalytiques utilisant un lit granulaire. On utilise généralement des grains de catalyseur de dimension caractéristique comprise entre 0,5 et 5 mm. Ces grains de catalyseur ont souvent une forme sensiblement sphérique pour facilité leur écoulement. Ils peuvent toutefois avoir une autre forme, par exemple s'ils sont produits par extrusion. Les catalyseurs mis en oeuvre dans le réacteur selon l'invention sont tous les catalyseurs ayant une dimension caractéristique (par exemple diamètre) comprise entre 0,5 et 5 mm de diamètre, et de manière préférée entre 1 à 4 mm.

De manière générale, la désactivation des catalyseurs, et par exemple celle des catalyseurs comprenant une zéolite utilisés en vue de la production des coupes diesel par oligomérisation, est rapide. Il est donc nécessaire de procéder régulièrement au remplacement du catalyseur afin de maintenir les performances du réacteur en termes de sélectivité et de rendement.

Deux technologies sont couramment utilisées à cet effet :

Dans la technologie en « lit fixe », on change l'ensemble du catalyseur contenu dans le réacteur au bout d'un cycle, lorsque l'on considère que le catalyseur est usé. On interrompt alors typiquement le fonctionnement, vide le réacteur, puis le remplit à nouveau par du catalyseur neuf et / ou régénéré.

Une autre technologie est employée pour des réactions catalytiques avec circulation (continue ou semi-continue) et régénération (continue ou semi-continue) du catalyseur: celle du « lit mobile » constitué d'un empilement de grains de catalyseurs contenus dans le réacteur, comme dans un lit fixe, mais lesdits grains étant en déplacement (à vitesse moyenne très lente, en continu ou discontinu) du haut vers le bas du réacteur sous l'effet de la force de gravité. On soutire en bas de réacteur, en continu ou en discontinu, une petite quantité de catalyseur usé, et introduit en tête de réacteur la même quantité de catalyseur neuf et / ou régénéré. On peut par exemple soutirer et réintroduire toutes les 4 ou 8 heures une quantité adéquate de catalyseur, de façon à ce que l'activité globale du catalyseur reste constante. Le catalyseur usé soutiré est typiquement régénéré puis recyclé, sauf éventuellement une petite quantité de catalyseur qui est éliminé et remplacé par du catalyseur neuf.

Le réacteur selon l'invention peut être mis en oeuvre aussi bien en lit fixe qu'en lit mobile, cette deuxième variante de mise en oeuvre représentant cependant la variante préférée.

Par ailleurs, pour les réactions à forte endothermicité ou à forte exothermicité, des moyens d'échange de chaleur avec le fluide réactionnel (four, ou échangeur thermique) sont parfois utilisés, à l'intérieur ou à l'extérieur du réacteur, de manière à maintenir la différence de température entre l'entrée et la sortie du réacteur dans des limites voulues et :ou à rétablir la température du fluide réactionnel entre 2 ou plusieurs réacteurs en série.

Le brevet US 2002/0011428 A1, décrit un réacteur à lit mobile multi-étagé destiné à la mise en oeuvre de réactions d'hydrotraitement. Un système, objet d'autres brevets (notamment le brevet US 5076908), permet d'ajouter et de retirer du catalyseur en continu ou en semi-continu de chaque étage du réacteur. La charge s'écoule d'un étage à l'autre. En revanche, le catalyseur d'un étage ne s'écoule pas dans l'étage suivant. Il a été trouvé qu'un tel système peut également être utilisé pour mettre en oeuvre une réaction d'oligomérisation. Cependant, le système décrit ne permet pas de contrôler efficacement le profil de température au sein de chaque section réactionnelle.

Le brevet WO 02/04575 décrit un procédé d'oligomérisation sur zéolite mettant en oeuvre un réacteur de type tubulaire, en lit fixe, ou tout autre réacteur pouvant être utilisé afin de réaliser la réaction d'oligomérisation. Le brevet décrit une méthode permettant d'ajouter et de soutirer du catalyseur en continu ou en semi-continu du réacteur. En revanche, le problème de contrôle de l'exothermicité de la réaction n'est pas abordé.

Le brevet EP 1236506A1 décrit un réacteur multi-étagés à faible épaisseur de lit avec échangeur thermique interne, utilisé principalement dans le cadre des réactions de déshydrogénation des paraffines longues. Ce système permet de contrôler de façon précise la température dans chaque section réactionnelle. Par contre, il n'est guère adapté à la mise en oeuvre de quantités importantes de catalyseur, étant adapté à de faibles épaisseurs de lit. Le taux de remplissage de catalyseur dans le réacteur est ici très réduit.

Les demandes de brevet précitées, qui décrivent des réacteurs superposés ou multi-étagés, ne décrivent donc pas de moyens permettant à la fois d'utiliser des quantités importantes de catalyseur et de mettre en oeuvre des moyens thermiques intégrés.

La présente invention décrit un réacteur, et un procédé de conversion chimique d'hydrocarbures utilisant ce réacteur, permettant de résoudre au mieux les problèmes liés à la mise en oeuvre de réactions fortement exothermiques ou endothermiques, notamment de réactions d'oligomérisation. Elle permet de mettre en oeuvre un réacteur compact, ayant une capacité importante pour ce qui est de la quantité de catalyseur présent, et ayant cependant un volume intérieur notable pour l'intégration d'un échangeur thermique.

Le document FR 2 129 913 A décrit un procédé de conversion d'hydrocarbures faisant appel à un appareillage qui est constitué d'une série de zones élargies séparées par des zones de section réduites.

Les espaces compris entre les zones réduites (5) et (6) et la virole du réacteur ne sont pas occupés par un échangeur de chaleur contrairement au réacteur selon la présente invention. Le document EP 1 236 506 A décrit une enceinte réactionnelle de forme sensiblement allongée selon un axe vertical comportant des échangeurs de chaleur (5, 5a...) qui ne sont jamais disposés au niveau des zones de rétrécissement d'écoulement du catalyseur (11) contrairement au réacteur selon la, présente demande.

### Description sommaire de l'invention :

La présente invention sera illustrée dans le cas particulier d'une réaction exothermique d'oligomérisation d'oléfines au sein d'une charge oléfinique (comprenant souvent de 20% à 100% poids d'oléfines). Cependant, son domaine d'application est plus étendu et concerne l'ensemble des réactions exothermiques ou endothermiques en phase gaz et/ou liquide pour lesquelles typiquement un volume catalytique notable et un contrôle thermique sont essentiels, en particulier les réactions d'addition d'une oléfine sur un autre composé présent dans la charge, par exemple une oléfine, un composé soufré, un composé azoté, une molécule aromatique, lesdites réactions d'addition visant à augmenter le poids moléculaire de ce composé,

En particulier, le présent réacteur est particulièrement adapté à la mise en oeuvre d'une réaction d'oligomérisation de coupes hydrocarbures oléfiniques contenant de 2 à 12 atomes de carbone, préférentiellement de 3 à 7 atomes de carbone, et plus préférentiellement encore de 4 à 6 atomes de carbone, permettant d'obtenir des hydrocarbures dans la gamme des coupes essence, diesel ou huile lubrifiante, et plus particulièrement des hydrocarbures de la coupe diesel, d'intervalle de distillation typique compris entre 160 et 370°C, notamment entre 200 et 365°C.

Il est souhaitable, pour cette réaction chimique, d'éviter des disparités importantes de l'activité catalytique entre les différentes zones réactionnelles, qui génèrent des pertes de conversion.

De plus, la réaction d'oligomérisation est fortement exothermique. Une température trop élevée favorise les réactions de craquage des composés oligomérisés et n'est donc pas souhaitable.

Une température trop basse dans certaines zones réactionnelles limite la conversion en composés suffisamment lourds recherchés dans la composition d'une coupe diesel. Il est donc souhaitable de contrôler précisément les températures au sein des diverses zones réactionnelles. En particulier, il est intéressant d'ajuster le niveau de température d'une zone réactionnelle catalytique en fonction de l'activité du catalyseur au sein de ladite zone.

Pour ces différentes raisons, il est souhaitable de mettre en oeuvre plusieurs zones réactionnelles successives, de préférence avec des volumes de catalyseur notables ou importants, et d'installer des moyens d'échange thermique permettant d'ajuster la température du fluide réactionnel entre 2 zones successives.

Pour résoudre les problèmes techniques précités, l'invention propose un réacteur ayant un volume catalytique notable ou important, des moyens d'échange thermiques intégrés, au niveau d'un rétrécissement de passage de catalyseur. En variante préférée, le réacteur selon l'invention comporte des moyens permettant une mise en oeuvre en lit mobile.

Selon une disposition caractéristique optionnelle, le réacteur peut comporter des moyens permettant de mettre en oeuvre, typiquement à l'entrée de chaque zone réactionnelle, une addition de catalyseur frais ou régénéré, pour son mélange avec une partie au moins du catalyseur usé (partiellement) issu de la zone réactionnelle amont.

L'invention propose également un procédé pour réaliser des réactions chimiques dans ce réacteur, en particulier un procédé d'oligomérisation de charges oléfiniques.

### Description sommaire des figures :

La figure 1 représente une vue du réacteur selon l'invention dans sa configuration de base.

La figure 2 représente une vue du réacteur selon l'invention dans une variante comportant une injection d'un fluide réactionnel additionnel entre deux zones réactionnelles.

### Description détaillée de l'invention :

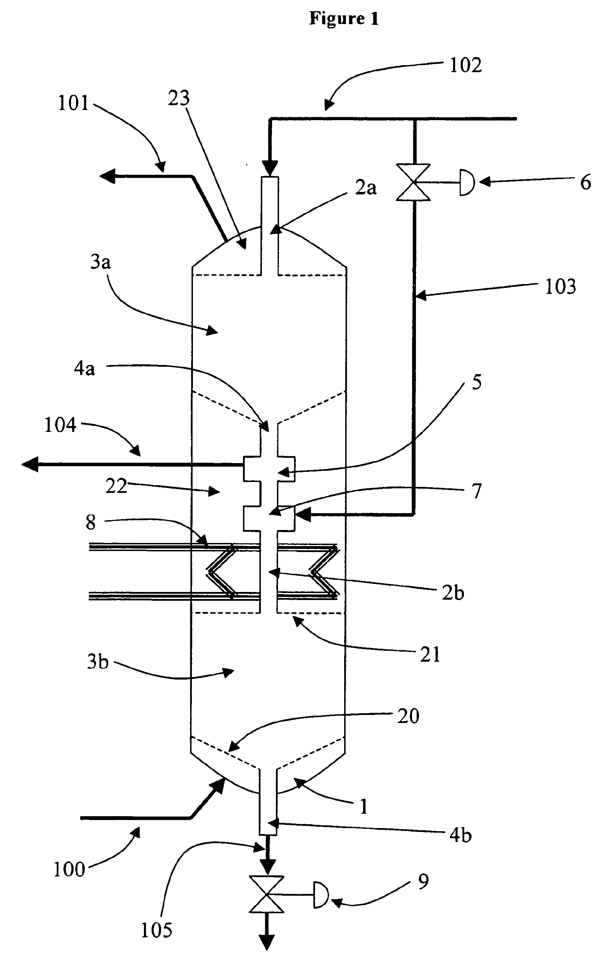

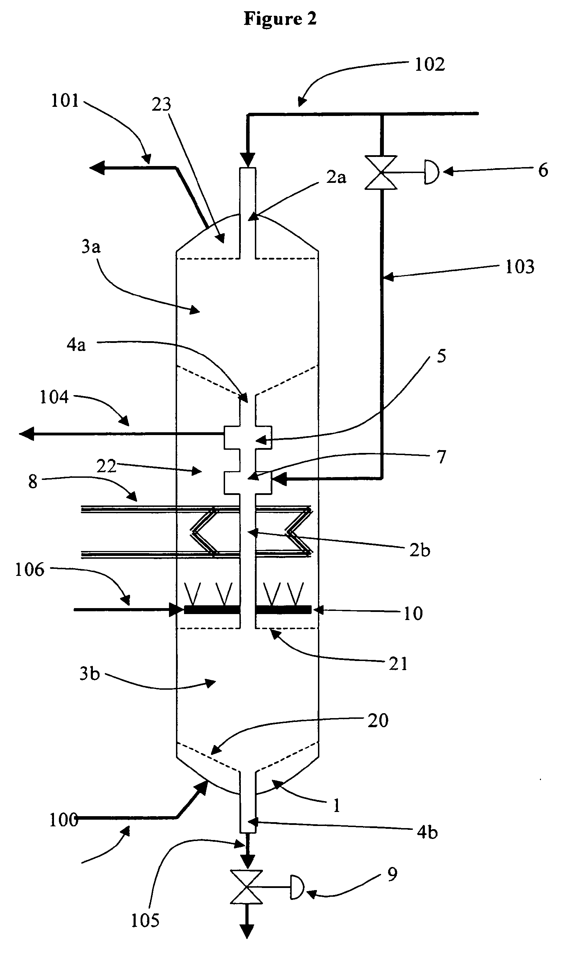

L'invention sera mieux comprise en référence aux figures 1 et 2, qui illustrent différents modes de réalisation de l'invention sans toutefois en limiter la portée.

L'invention est illustrée dans sa configuration de base par la figure 1.

Sous une forme générale, l'invention concerne un réacteur de forme allongée le long d'un axe sensiblement vertical, ce réacteur comprenant dans une même virole plusieurs zones réactionnelles catalytiques étagées verticalement, ce réacteur étant adapté à la circulation axiale du fluide réactionnel en série dans chacune de ces zones, et comprenant des moyens (100) d'introduction et (101) d'évacuation dudit fluide réactionnel, des moyens (102) d'amenée de catalyseur frais ou régénéré en tête du réacteur, et des moyens (105) d'évacuation de catalyseur usé en partie inférieure du réacteur, ce réacteur comprenant notamment :
une zone réactionnelle supérieure Za (3a) remplie de catalyseur granulaire, de section (dans un plan horizontal) sensiblement identique à celle de la virole sur une partie de sa hauteur, directement reliée via une zone de rétrécissement à une zone réactionnelle Zb (3b) également remplie de catalyseur granulaire et de section sensiblement identique à celle de la virole sur une partie de sa hauteur, située juste en dessous de la zone réactionnelle supérieure Za, ces zones réactionnelles Za et Zb étant deux zones réactionnelles successives directement reliées d'une part par un passage d'effluents réactionnels, et d'autre part par un passage de catalyseur de la zone Za vers la zone Zb à travers ladite zone de rétrécissement, la zone Za étant reliée en sa partie supérieure, directement ou indirectement, auxdits moyens (102) d'amenée de catalyseur frais ou régénéré, la zone Zb étant reliée en sa partie inférieure, directement ou indirectement, auxdits moyens (105) d'évacuation de catalyseur usé, le réacteur comprenant également, disposé au niveau de la zone de rétrécissement, entre cette zone de rétrécissement et la virole du réacteur, un échangeur de chaleur (8) pour le réchauffage ou le refroidissement du fluide réactionnel circulant entre les zones Za et Zb.

Les zones Za et Zb étant remplies de catalyseur granulaire sur une section sensiblement identique à celle de la virole du réacteur sur une partie de sa hauteur, elles ont donc un volume catalytique élevé. Cependant, on profite de la zone de rétrécissement, permettant le passage du catalyseur pour loger un échangeur intégré au réacteur au niveau de cette zone, typiquement annulaire..

La zone Za comprend en sa partie inférieure un convergent sensiblement conique comprenant des perforations pour le passage du fluide réactionnel, relié à un canal (2b) de diamètre réduit par rapport à celui du réacteur, ce canal délimitant une partie au moins de la zone de rétrécissement dans lequel le catalyseur peut s'écouler (au bout de chaque cycle en lit fixe, de façon continue ou semi-continue en lit mobile). Ce canal (2b) a typiquement un diamètre compris entre 1% et 50% du diamètre du réacteur au niveau de la zone de rétrécissement, de façon préférée entre 1% et 30%, et de façon très préférée entre 2% et 20%,.

Il en résulte une place importante disponible entre la zone de rétrécissement et la virole, que l'on utilise avantageusement pour installer l'échangeur de chaleur (8). Par rapport à l'art antérieur, on réunit deux avantages : celui lié à l'utilisation de volumes importants de catalyseur (les zones réactionnelles ayant le diamètre du réacteur, ceci en liaison avec des zones réactionnelles de type réacteur axial, dans lesquelles le fluide réactionnel s'écoule principalement de façon sensiblement parallèle à l'axe vertical du réacteur), et celui de pouvoir néanmoins loger un échangeur de chaleur intégré, grâce au rétrécissement. Typiquement, l'échangeur de chaleur (8) est disposé autour du passage de catalyseur à rétrécissement.

L'invention peut concerner aussi bien un réacteur en lit fixe qu'un réacteur en lit mobile, même si l'utilisation en lit mobile est préférée. Dans le cas d'un réacteur en lit fixe, on remplit complètement l'ensemble des zones réactionnelles par du catalyseur régénéré et/ou frais, et l'on vide complètement le réacteur de tout son catalyseur lorsque celui-ci, au bout d'un cycle de fonctionnement (en lit fixe), est usé à un point tel que son remplacement est nécessaire.

Les deux zones Za et Zb sont selon l'invention des zones réactionnelles successives, ce qui signifie que les effluents de l'une de ces zones alimentent l'autre zone sans traverser une autre zone réactionnelle.

Selon l'invention, utilisable en lit mobile, le réacteur représenté à la figure 1, comprend des moyens de soutirage et d'évacuation (104) d'une partie du catalyseur usé issu de la zone réactionnelle supérieure Za reliés aux moyens de collecte. Ceci permet d'éliminer une partie (par exemple de 10 à 70 %, et souvent de 15 à 50%) du catalyseur usé, avant l'introduction de catalyseur régénéré et/ou frais.

Ainsi, l'activité moyenne du catalyseur en mélange alimentant Zb est augmentée, sans généralement augmenter de façon notable le débit total de catalyseur entrant dans Zb, voire en maintenant constant le débit de catalyseur circulant dans Za et dans Zb. A débit total constant de catalyseur frais et/ou régénéré, l'invention permet d'obtenir un certain rééquilibrage de l'activité catalytique entre les différentes zones réactionnelles.

Cet appoint de catalyseur régénéré et/ou frais peut aussi représenter par exemple de 10 à 70 %, et souvent de 15 à 50% du catalyseur alimentant Za en tête de réacteur, ou bien alimentant Zb.

Typiquement, les deux zones réactionnelles successives Za et Zb sont reliées par un circuit de circulation du fluide réactionnel traversant l'échangeur de chaleur (8) pour le réchauffage ou le refroidissement de ce fluide réactionnel, ce circuit s'établissant typiquement essentiellement autour de la zone de rétrécissement, entre cette zone et la virole du réacteur, dans une zone intermédiaire située entre les deux zones réactionnelles successives Za et Zb. Optionnellement, selon une variante représentée à la figure 2, la zone intermédiaire comprend des moyens d'introduction (10) d'un ou plusieurs fluides réactionnels additionnels (106), et de mélange de ce ou ces fluides avec le fluide réactionnel circulant entre les zones réactionnelles successives Za et Zb. Il peut être en particulier utile d'ajouter un nouveau réactif chimique, pour réaliser une réaction subséquente à celle réalisée dans la zone amont, par exemple une réaction d'alkylation d'une molécule aromatique ou d'un mélange d'aromatiques, et/ou d'introduire un gaz de recyclage riche en hydrogène (comprenant plus de 50% et souvent plus de 70% molaire d'H2), afin d'accroître la quantité d'hydrogène présent. Ce gaz peut aussi avoir un effet thermique, de réchauffage ou plus fréquemment de refroidissement des effluents avant qu'ils ne rentrent dans la zone réactionnelle aval.

Le réacteur de l'invention, et toutes ses variantes telles que décrites dans la présente demande, peuvent être utilisés notamment dans le cadre d'un procédé de conversion chimique d'hydrocarbures, et en particulier d'un procédé d 'oligomérisation de charges oléfiniques ayant de 2 à 12 atomes de carbone, ce ou ces procédé(s) constituant un autre objet de l'invention.

Dans un tel procédé, notamment d'oligomérisation, les conditions typiques sont les suivantes :
la pression est comprise entre 0,1 et 10 MPa et préférentiellement entre 0,3 et 7 MPa, la température est comprise entre 40 et 600°C et préférentiellement entre 60 et 400°C, la vitesse spatiale horaire VVH est comprise entre 0,01 et 100 h⁻¹ et préférentiellement entre 0,4 et 30 h⁻¹, et le catalyseur circule dans chaque zone réactionnelle à une vitesse (moyenne) comprise entre 1 cm/heure et 200 cm/heure et préférentiellement entre 2 cm/heure et 100 cm/heure.

L' invention est particulièrement adaptée aux procédés dans lesquels on choisit les conditions opératoires : température, pression, VVH, de façon à limiter la variation de température dans chacune des zones réactionnelles à une ou plusieurs valeurs comprises entre 2°C et 50°C. L'échangeur de chaleur (8) peut typiquement refroidir le fluide réactionnel (ou le réchauffer pour un procédé endothermique) de 2 à 50°C, et de préférence de 10 à 50°C.

### Description détaillée des figures :

On se réfère maintenant à nouveau à la figure 1. Dans le réacteur représenté, le catalyseur parcourt l'ensemble des zones réactionnelles en courant descendant, et la charge (le fluide réactionnel) parcourt également l'ensemble des zones réactionnelles mais à contre-courant du catalyseur. Les zones réactionnelles représentées sont du type réacteur axial. Toutefois, une configuration dans laquelle le fluide réactionnel circulerait à co-courant du catalyseur, c'est à dire de haut en bas est également parfaitement possible dans le cadre de l'invention. Par ailleurs, les zones réactionnelles peuvent être du type réacteur radial. Une configuration en réacteur axial est cependant préférée.

Le catalyseur frais et/ou régénéré est alimenté, principalement en général, en tête du réacteur par la ligne (102), puis le conduit (2a). Ce catalyseur s'écoule lentement, de façon continue ou discontinue dans une zone Za, référencée (3a) sur la figure 1, qui est la zone réactionnelle supérieure. En partie basse de cette zone, il est collecté dans une zone de collecte (4a), puis s'écoule dans la chambre (5). Une fraction de ce catalyseur, partiellement usé, est soutirée par le conduit (104), typiquement pour être régénérée. La chambre (5) peut être munie de moyens (non représentés) pour faciliter l'extraction d'un produit granulaire tel que du catalyseur, par exemple une vis d'extraction, ou un bidon de transport pneumatique, ou un lit fluidisé ou tout autre moyen connu de l'homme du métier. On peut également utiliser un conduit (104) incliné d'au moins 60° par rapport à l'horizontale et optionnellement des injections de gaz d'aération du catalyseur (par exemple de l'azote) pour faciliter l'évacuation du catalyseur.

La partie non extraite du catalyseur présent dans la chambre (5) s'écoule dans la chambre de mélange (7), pour être mélangée avec une autre partie du catalyseur frais et/ou régénéré, introduit par la ligne (103), via la vanne (6). On peut utiliser un conduit (103) incliné d'au moins 60° par rapport à l'horizontale, y compris dans sa partie terminale, et optionnellement des injections de gaz d'aération du catalyseur (par exemple de l'azote) pour faciliter l'introduction du catalyseur frais et/ou régénéré.

La chambre de mélange (7) peut être munie de moyens (non représentés) pour faciliter le mélange de catalyseur frais/régénéré et de catalyseur partiellement usé. On peut notamment utiliser un pannier rotatif pour brasser le catalyseur dans la zone (7), ou bien des pales de brassage disposées dans la zone (7), et mises en mouvement par un moteur externe. On peut également utiliser un lit fluidisé ou tout autre système de mélange de granulés connu.

Le mélange de catalyseurs ainsi formé, a une activité catalytique été augmentée par rapport à celle du catalyseur usé issu de la zone Za. Ce mélange traverse un passage à rétrécissement (2b), puis alimente la zone Zb, référencée (3b) sur la figure 1, qui est immédiatement inférieure à Za (du point de vue des zones réactionnelles).

Le catalyseur usé issu de la zone Zb (3b) circule dans un conduit d'extraction (4b), puis est évacué du réacteur par le conduit (105) sur lequel se trouve la vanne (9). Il est ensuite envoyé vers une zone de régénération (non représentée) par l'intermédiaire d'un système de transport de particules au moyen d'un fluide de transport liquide ou gazeux (par exemple de l'azote), selon les technologies bien connues de l'homme du métier concernant le lit mobile. On peut notamment utiliser, au niveau du conduit (105) ou en dessous de la vanne (9), un ballon de recette du catalyseur usé permettant le stockage d'une quantité déterminée de catalyseur avant son évacuation séquentielle par transport pneumatique, au moyen généralement d'un fluide primaire d'aération du catalyseur, et d'un fluide secondaire de transport.

Les technologies permettant d'introduire, d'extraire, de mélanger, ou de transporter des produits granulaires sont des technologies génériques bien connues de l'homme du métier, auxquelles l'invention n'est pas liée.

La zone de régénération du catalyseur, non représentée, peut être équipée d'un élutriateur ou de tout autre moyen permettant de séparer les particules fines créées au cours des diverses opérations de transport du catalyseur. Le catalyseur régénéré (après notamment une oxydation contrôlée des dépôts carbonés) est typiquement recyclé par les conduits (102) et (103), avec un appoint de catalyseur frais. Une fraction du catalyseur de la boucle (souvent du catalyseur usé) est généralement évacué pour permettre l'appoint de catalyseur frais en maintenant constante la quantité totale de catalyseur mis en oeuvre.

Le fluide réactionnel, par exemple une charge d'hydrocarbures oléfiniques en C4-C6 (ayant essentiellement de 4 à 6 atomes de carbone), est alimentée par le conduit (100) dans la chambre d'alimentation 1, traverse la zone réactionnelle initiale Zb (3b) remplie de catalyseur, puis la zone intermédiaire (22) ne contenant pas de catalyseur, rentre ensuite dans la zone réactionnelle finale Za (3a) remplie de catalyseur, puis rentre dans la chambre (23) avant d'être évacué par le conduit (101). Les zones réactionnelles Za et Zb sont avantageusement munies en partie haute et basse de grilles perforées (représentées en pointillé sur les figures) pour permettre le passage du fluide réactionnel. Ces grilles peuvent être inclinées d'un angle de 60° ou plus, en partie basse, pour faciliter l'écoulement du catalyseur.

Un échangeur thermique (8) à circulation de fluide thermique est disposé à l'intérieur du réacteur, dans la zone intermédiaire (22) (elle-même disposée à l'intérieur du réacteur), pour réaliser un échange thermique avec le fluide réactionnel transitant entre Zb et Za. Cet échangeur thermique est avantageusement disposé au niveau du rétrécissement 2b du passage de catalyseur, du fait de la place ainsi dégagée à l'intérieur du réacteur.

Cet échangeur thermique fait généralement appel à un fluide thermique de réchauffage ou de refroidissement circulant à l'intérieur de tubes, l'ensemble des tubes formant par exemple une ou plusieurs épingles plongeant au sein du fluide réactionnel dans la zone intermédiaire (22). L'échangeur peut cependant être de tout type connu de l'homme du métier, par exemple un échangeur à plaques, ou à tubes ailetés, ou à tubes nus, droits ou enroulés en hélice autour de l'axe vertical du réacteur (et typiquement de la zone à rétrécissement), l'invention n'étant aucunement limitée à une, technologie particulière de cet échangeur.

Divers fluides sous pression peuvent être utilisés comme fluide thermique de réchauffage ou de refroidissement : vapeur d'eau, air, eau, hydrogène ou gaz de recyclage riche en hydrogène, azote, sels fondus, huile aromatique, la charge elle-même etc...

La figure (2) représente un autre réacteur selon la présente invention, comportant les mêmes éléments que ceux du réacteur de la figure 1. Il comprend en sus un conduit (106) pour l'alimentation d'un fluide réactionnel additionnel, pour un appoint de réactif et/ou un appoint d'hydrogène. ce fluide est distribué dans la zone intermédiaire (22) via une rampe de distribution (10) pour faciliter son mélange homogène avec le fluide réactionnel issu de la zone Zb. Le mélange est également favorisé par le fait que la zone intermédiaire (22) est exempte de catalyseur.

Les avantages du, ou des réacteur(s) selon la présente invention par rapport aux réacteurs connus de l'art antérieur sont :
- une nette amélioration des performances (conversion, sélectivité, rendement)
- une fiabilité plus importante de l'installation due à la simplicité et à la compacité des moyens utilisés, en particulier des moyens d'échange thermique mis en oeuvre.
- le coût du réacteur, et celui de son installation sont également réduits du fait de sa compacité

Un fonctionnement type du réacteur de la figure 1 est le suivant : Le débit de l'appoint de catalyseur régénéré, ou éventuellement de catalyseur frais, est défini de manière à maintenir un niveau d'activité déterminé sur chaque zone réactionnelle. Par exemple, on pourra définir ce débit d'appoint de catalyseur en fonction d'une caractéristique du fluide réactionnel en sortie de zone réactionnelle. Cette caractéristique peut être une température, une composition, une conversion, ou toute autre caractéristique physico-chimique mesurable en ligne. Les corrélations qui relient l'une ou plusieurs de ces grandeurs mesurables en ligne et le niveau d'activité du catalyseur dépendent de la réaction mise en oeuvre, du type de catalyseur et de sa vitesse de circulation. Un moyen simple est notamment de contrôler la conversion dans la zone Zb, ou la variation de température (delta T) du fluide réactionnel dans cette zone, ou bien la température de sortie de cette zone, par action sur le débit d'appoint de catalyseur régénéré et/ou frais : Si la valeur mesurée du delta T est inférieure à la valeur prévue (dépendant typiquement de la composition initiale de la charge), ou si la valeur de la température de sortie de la zone correspond à une réaction insuffisante, on accroît le débit d'appoint de catalyseur régénéré et/ou neuf dans cette zone, et inversement on réduit l'appoint si la conversion dans la zone (déduite du delta T ou de la température de sortie) est trop importante. On peut, de façon simultanée, évacuer la même quantité de catalyseur usé que celle de l'appoint de catalyseur, avant de réaliser le mélange, pour maintenir constant le débit global de catalyseur dans la zone Zb.

Le débit de catalyseur d'appoint peut donc être entièrement automatisé. En alternative, il peut être ajusté à certains moments (par exemple une ou deux fois par jour) par l'opérateur, au vu notamment des températures et/ou du delta T précité.

Le réchauffage ou le refroidissement du fluide réactionnel dans l'échangeur (8) (delta T) peut être contrôlé par notamment le débit ou le niveau de température du fluide thermique circulant dans l'échangeur (8).

Le réacteur de la figure 2 fonctionne de façon analogue. On utilise dans ce réacteur un appoint de réactifs et/ou d'hydrogène alimenté par le conduit (106). Cet appoint est typiquement à débit et température contrôlés.

Le catalyseur circulant dans le réacteur selon l'invention peut être de divers types. Dans le cas d'un réacteur d'oligomérisation, on peut utiliser notamment tout type de catalyseur acide permettant l'oligomérisation, par exemple un catalyseur amorphe de type silice-alumine ou de type acide phosphorique solide ou de type résine échangeuse d'ion, ou alors un catalyseur présentant une sélectivité de forme, par exemple un catalyseur zéolithique, par exemple un catalyseur zéolithique de type structural MFI, FER, EUO, TON, LTL, MOR, MTT, MEL, MWW, MTW ou les zéolithes NU-86, NU-87, NU-88, IM-5.

Ces catalyseurs acides zéolithiques peuvent être utilisés en l'état ou après modifications, les dites modifications affectant de préférence l'acidité du catalyseur, le terme acidité désignant aussi bien
la force propre des sites acides que la concentration en sites acides.

Ces modifications peuvent affecter la charpente de la zéolithe, par exemple s'il s'agit d'une désalumination par vapotraitement ou par traitement acide, et/ou affecter la surface de la zéolithe, par exemple (i) par des échanges de protons par des cations de types alcalins, (ii) par dépôts de phase inerte sur la surface des zéolithes.

Les conditions opératoires préférées sont celles utilisées de manière standard pour l'oligomérisation des oléfines par des catalyseurs de type solides acides:
- une température comprise entre 100°C et 300°C
- une pression comprise entre 0,1 et 7 MPa
- une VVH (vitesse spatiale exprimée comme le rapport du débit volumique de charge au volume de catalyseur contenu dans la zone réactionnelle) comprise entre 0,01 et 100 h⁻¹.

Le réacteur selon l'invention est particulièrement adapté aux réactions d'oligomérisation d'oléfines, mais il peut être plus généralement utilisé pour tout type de réaction exothermique ou endothermique, se déroulant en phase gaz et/ou liquide, et pour lesquelles un contrôle fin du profil de température dans chaque zone réactionnelle est nécessaire, en particulier les réactions d'addition d'une oléfine sur un autre composé présent dans la charge, par exemple une oléfine, un composé soufré, un composé azoté, une molécule aromatique, lesdites réactions d'addition visant à augmenter le poids moléculaire de ce composé, en particulier les réactions d'alkylation de composés thiophéniques par des oléfines, la métathèse des oléfines.

Le réacteur selon l'invention peut également être utilisé pour les réactions d'isomérisation squelettale des oléfines légères telles que, par exemple, les oléfines à 4 ou 5 atomes de carbone.

Dans le cas de réactions exothermiques, le fluide thermique de refroidissement (réfrigérant) peut être tout fluide adapté à réaliser l'échange thermique dans de bonnes conditions, notamment en respectant une différence moyenne de température entre le fluide réactionnel et le fluide de refroidissement d'au moins 5°C et préférentiellement d'au moins 10°C.

L'invention n'est aucunement liée à un fluide de refroidissement ou de réchauffage particulier.

### Exemple selon l'invention:

Cet exemple concerne la réaction d' oligomérisation d' une coupe C3 insaturée sur lit dans un réacteur selon l'invention, tel que celui de la figure 1.

Le réacteur comprend deux zones réactionnelles notées Zb (zone initiale (3b)) et Za (zone finale (3a)), en série, séparées par une zone intermédiaire comprenant un système de refroidissement à eau constituant l'échangeur thermique (8).

La charge et le catalyseur circulent à contre-courant.

Un catalyseur de type zéolithe mordenite désaluminée ayant un rapport molaire Si/Al de 57 a été testé pour la réaction d'oligomérisation du propène, après mise sous forme de billes avec un liant alumine. Le catalyseur utilisé est mis en forme de billes sphériques de 3 mm de diamètre.

La charge utilisée pour ce test est une charge issue du vapocraquage qui contient 94% en poids de propène et 6% en poids de propane.

Les conditions ont été choisies de manière à optimiser la formation de la coupe diesel dans l'oligomérat produit.

Les conditions opératoires sont les suivantes :

| | |
|---|---|
| Température de la charge en entrée du réacteur | 210°C |
| Pression | 5,5 MPa |
| VVH | 0,7 h⁻¹ |

Le débit volumique de charge par volume de catalyseur (VVH) a été calculé en fonction de la masse totale de catalyseur sur les deux zones réactionnelles. L'appoint de catalyseur frais et régénéré est fait de manière à maintenir une conversion stable dans les deux zones réactionnelles.

On soutire 20% du catalyseur usé issu de la zone réactionnelle supérieure, que l'on remplace par du catalyseur régénéré en quantité identique, pour accroître l'activité catalytique dans la zone réactionnelle inférieure.

La température du liquide de refroidissement est réglée pour que la température de réaction à l'entrée de la deuxième zone réactionnelle soit égale à 210°C. Le fluide de refroidissement utilisé est de l'eau introduite à 25°C.

Les résultats obtenus sont reportés dans le tableau 1.

**Tableau 1**

| Zéolithe | MOR |
|---|---|
| Rapport molaire Si/Al | 57 |
| Température entrée zone réactionnelle Zb (°C) | 210 |
| Température sortie zone réactionnelle Zb (°C) | 227 |
| Température entrée zone réactionnelle Za (°C) | 210 |
| Température sortie zone réactionnelle Za (°C) | 225 |
| Oligomère C5+ (%poids) | 86,5 |
| Coupe diesel (> 180°C, %poids) | 81,2 |
| Indice de cétane moteur* | 38 |

| | |
|---|---|
| * après hydrogénation | |

L'utilisation du réacteur selon la présente invention, notamment pour la réaction d'oligomérisation de charges oléfiniques allant de C3 à C6 apporte plusieurs améliorations majeures :
- Le réacteur est compact tout en ayant un volume catalytique élevé, et un échangeur thermique intégré. Son coût, ainsi que son coût d'installation sont relativement faibles.
- L'appoint de catalyseur neuf ou régénéré en zone Zb permet, en variante, un rééquilibrage au moins partiel de l'activité catalytique entre les zones réactionnelles, ce qui est favorable au rendement de la coupe diesel.
- Le système de régénération continu d'une partie du catalyseur permet, en variante, de fonctionner sans avoir à arrêter l'unité pour changer le catalyseur.
- La zone d'échange thermique située entre les deux zones réactionnelles permet une amélioration de l'homogénéité de la température dans les deux zones réactionnelles.

## Revendications

1. Réacteur de forme allongée le long d'un axe sensiblement vertical pour la mise en oeuvre de réactions endothermiques et exothermiques, ce réacteur comprenant dans une même virole plusieurs zones réactionnelles catalytiques étagées verticalement, ce réacteur étant adapté à la circulation axiale d'un fluide réactionnel en série dans chacune de ces zones, et comprenant des moyens (100) d'introduction et (101) d'évacuation dudit fluide réactionnel, des moyens (102) d'amenée de catalyseur frais ou régénéré en tête du réacteur, et des moyens (105) d'évacuation de catalyseur usé en partie inférieure du réacteur, ce réacteur comprenant notamment :
une zone réactionnelle supérieure Za (3a) remplie de catalyseur granulaire, de section sensiblement identique à celle de la virole sur une partie de sa hauteur, comprenant en sa partie inférieure un convergeant sensiblement conique comprenant des perforations pour le passage du fluide réactionnel, relié à un canal (2b) de diamètre réduit de 2% à 20% par rapport à celui du réacteur, ladite zone réactionnelle Za étant directement reliée via une zone de rétrécissement à une zone réactionnelle Zb (3b) également remplie de catalyseur granulaire et de section identique à celle de la virole sur une partie de sa hauteur, située juste en dessous de la zone réactionnelle supérieure Za, ces zones réactionnelles Za et Zb étant deux zones réactionnelles successives directement reliées d'une part par un passage d'effluents réactionnels à travers une zone intermédiaire (22) ne contenant pas de catalyseur, et d'autre part par un passage de catalyseur de la zone Za vers la zone Zb à travers une chambre de soutirage de catalyseur (5), une chambre de mélange (7) et ledit canal (2b), la chambre de mélange (7) étant alimentée par une partie de catalyseur frais ou régénéré par le moyen (103), et la zone Za étant reliée en sa partie supérieure, directement ou indirectement, auxdits moyens (102) d'amenée de catalyseur frais ou régénéré, la zone Zb étant reliée en sa partie inférieure, directement ou indirectement, auxdits moyens (105) d'évacuation de catalyseur usé, le réacteur comprenant également, disposé au niveau de la zone de rétrécissement, entre cette zone de rétrécissement et la virole du réacteur, un échangeur de chaleur (8) pour le réchauffage ou le refroidissement du fluide réactionnel circulant entre les zones Za et Zb.

2. Réacteur selon la revendication 1, comprenant en outre un conduit (106) pour l'alimentation d'un fluide réactionnel additionnel, ce fluide étant distribué dans la zone intermédiaire (22) via une rampe de distribution (10).

3. Procédé d'oligomérisation de charges oléfiniques ayant de 2 à 12 atomes de carbone faisant appel au réacteur selon la revendication 1, dans lequel le fluide réactionnel est alimentée par le conduit (100) dans la chambre d'alimentation (1), traverse la zone réactionnelle initiale Zb (3b) remplie de catalyseur, subit un échange thermique au moyen de l'échangeur (8) disposé à l'intérieur de la zone intermédiaire (22), elle même située à l'intérieur du réacteur, puis la zone intermédiaire (22) ne contenant pas de catalyseur, rentre ensuite dans la zone réactionnelle finale Za (3a) remplie de catalyseur , puis rentre dans la chambre (23) avant d'être évacué par le conduit (101).

4. Procédé d'oligomérisation de charges oléfiniques ayant de 2 à 12 atomes de carbone selon la revendication 3, dans lequel la pression est comprise entre 0,1 et 10 MPa, la température est comprise entre 40 et 600°C, la vitesse spatiale horaire VVH est comprise entre 0,01 et 100 h⁻¹ et dans lequel le catalyseur circule dans chaque zone réactionnelle à une vitesse comprise entre 1 cm/heure et 200 cm/heure.

5. Procédé d'oligomérisation de charges oléfiniques ayant de 2 à 12 atomes de carbone selon la revendication 3, dans lequel on choisit les conditions opératoires : température, pression, VVH, de façon à limiter la variation de température dans chacune des zones réactionnelles Za et Zb à une ou plusieurs valeurs comprises entre 2°C et 50°C.

## Claims

1. A reactor which is elongate along a substantially vertical axis, said reactor comprising, in the same shell, a plurality of vertically staged catalytic reaction zones, said reactor being adapted to axial motion of a reaction fluid in series in each of said zones, and comprising means (100) for introducing and means (101) for evacuating said reaction fluid, means (102) for supplying fresh or regenerated catalyst to the reactor head, and means (105) for evacuating used catalyst from the lower portion of the reactor, said reactor comprising in particular: an upper reaction zone Za (3a) filled with granular catalyst, with a cross section which is substantially identical to that of the shell over part of its height, connected directly via a contracted zone to a reaction zone Zb (3b) which is also filled with granular catalyst and with a cross section that is substantially identical to that of the shell over part of its height, located just below the upper reaction zone Za, said reaction zones Za and Zb being two successive reaction zones connected directly via a passage for reaction effluents, and via a passage for catalyst from the zone Za to the zone Zb through said contracted zone, zone Za being directly or indirectly connected at its upper portion to said means (102) for supplying fresh or regenerated catalyst, zone Zb being connected at its lower portion, directly or indirectly, to said means (105) for evacuating used catalyst, the reactor also comprising, disposed at the contracted zone between said contracted zone and the shell of the reactor, a heat exchanger (8) for heating or cooling reaction fluid moving between zones Za and Zb.

2. A reactor according to claim 1, comprising also a conduct (106) for feeding an additional reactive fluid, that fluid being distributed inside the intermediate zone (22) via a distribution rack (10).

3. A process for oligomerization of hydrocarbon feeds having from 2 to 12 carbon atoms using the reactor according to claim 1, in which the reactive fluid is supplied via the line 100 to supply chamber 1, traverses the initial reaction zone Zb, 3b, filled with catalyst, then the intermediate zone 22 containing no catalyst, returns to the final reaction zone Za, 3a, filled with catalyst, then enters the chamber 23 before being evacuated via the line 101.

4. A process for oligomerization of hydrocarbon feeds having from 2 to 12 carbon atoms according to claim 3, in which the pressure is in the range 0.1 to 10 MPa, the temperature is in the range 40°C to 600°C, the hourly space velocity IISV is in the range 0.01 to 100 h⁻¹ and in which the catalyst moves in each reaction zone at a rate in the range 1 cm/hour to 200 cm/hour.

5. A process for oligomerization of hydrocarbon feeds having from 2 to 12 carbon atoms according to claim 3, in which the operating conditions: temperature, pressure, HSV, are selected in a manner that limits the variation in temperature in each of the reaction zones to one or more values in the range 2°C to 50°C.

## Patentansprüche

1. Reaktor mit einer entlang einer im Wesentlichen vertikalen Achse langgestreckten Form zur Durchführung endothermischer und exothermischer Reaktionen, wobei dieser Reaktor in einem selben Mantel mehrere katalytische Reaktionszonen umfasst, die vertikal gestuft sind, dieser Reaktor für den aufeinanderfolgenden axialen Umlauf eines Reaktionsfluids in jeder dieser Zonen geeignet ist, und umfassend Mittel zur Einleitung (100) und zur Ableitung (101) dieses Reaktionsfluids, Mittel zur Zuleitung (102) des frischen oder regenerierten Katalysators in den Kopf des Reaktors, und Mittel zur Ableitung des verbrauchten Katalysators (105) im Unterteil des Reaktors, wobei dieser Reaktor insbesondere umfasst:
eine obere Reaktionszone Za (3a), die mit granulatförmigem Katalysator gefüllt ist und deren Querschnitt auf einem Teil ihrer Höhe im Wesentlichen dem des Mantels entspricht, umfassend in ihrem Unterteil einen im Wesentlichen konischen zusammenlaufenden Abschnitt, der Perforationen für den Durchgang des Reaktionsfluids aufweist und mit einem Kanal (2b) verbunden ist, dessen Durchmesser im Vergleich zu dem des Reaktors um 2% bis 20% reduziert ist, wobei diese Reaktionszone Za über eine Verengungszone direkt mit einer unter der Reaktionszone Za liegenden Reaktionszone Zb (3b) verbunden ist, die ebenfalls mit granulatförmigem Katalysator gefüllt ist und deren Querschnitt auf einem Teil ihrer Höhe im Wesentlichen dem des Mantels entspricht, wobei diese Reaktionszonen Za und Zb zwei aufeinanderfolgende Reaktionszonen sind, die einerseits über einen Durchgang für Reaktionsabprodukte durch eine Zwischenzone (22), die keinen Katalysator enthält, und andrerseits über einen Durchgang für den Katalysator von der Zone Za zur Zone Zb durch eine Katalysatorentnahmekammer (5), eine Mischkammer (7) und diesen Kanal (2b) direkt verbunden sind, wobei diese Mischkammer (7) durch das Mittel (103) mit einem Teil des frischen oder regenerierten Katalysators versorgt wird und die Zone Za in ihrem Oberteil direkt oder indirekt mit den Mitteln (102) zur Zuleitung des frischen oder regenerierten Katalysators verbunden ist, die Zone Zb in ihrem Unterteil direkt oder indirekt mit den Mitteln (105) zur Ableitung des verbrauchten Katalysators verbunden ist, wobei der Reaktor auch einen Wärmeaustauscher (8) umfasst, der auf der Höhe der Verengungszone zwischen dieser Verengungszone und dem Reaktormantel angeordnet ist, um das zwischen den Zonen Za und Zb umlaufende Reaktionsfluid zu erwärmen oder abzukühlen.

2. Reaktor nach Anspruch 1, außerdem umfassend eine Leitung (106) zur Zuführung eines zusätzlichen Reaktionsfluids, wobei dieses Fluid durch ein Verteilerrohr (10) in der Zwischenzone (22) verteilt wird.

3. Verfahren zur Oligomerisierung von olefinischen Chargen mit 2 bis 12 Kohlenstoffatomen unter Verwendung des Reaktors nach Anspruch 1, wobei das Reaktionsfluid durch die Leitung (100) der Versorgungskammer (1) zugeführt wird, die mit Katalysator gefüllte Anfangsreaktionszone Zb (3b) durchläuft, durch den in der Zwischenzone (22), die selbst innerhalb des Reaktors liegt, angeordneten Wärmeaustauscher (8) einem Wärmeaustausch unterzogen wird, die Zwischenzone (22) durchläuft, die keinen Katalysator enthält, in die mit Katalysator gefüllte Endreaktionszone Za (3a) eintritt und dann in die Kammer (23) eintritt, bevor es durch die Leitung (101) ausgeleitet wird.

4. Verfahren zur Oligomerisierung von olefinischen Chargen mit 2 bis 12 Kohlenstoffatomen nach Anspruch 3, wobei der Druck zwischen 0,1 und 10 MPa liegt, die Temperatur zwischen 40 und 600°C liegt, die stündliche Raumgeschwindigkeit VVH zwischen 0,01 und 100 h⁻¹ liegt und wobei der Katalysator in jeder Reaktionszone mit einer Geschwindigkeit zwischen 1 cm/Stunde und 200 cm/Stunde umläuft.

5. Verfahren zur Oligomerisierung von olefinischen Chargen mit 2 bis 12 Kohlenstoffatomen nach Anspruch 3, wobei die folgenden Bedingungen: Temperatur, Druck, VVH derart gewählt werden, dass die Temperaturänderung in jeder der Reaktionszonen Za und Zb auf einen oder mehrere Werte zwischen 2°C und 50°C begrenzt wird.
